Europäisches Patentamt

European Patent Office

Office européen des brevets

(19)

(11) Publication number: **0 196 162**
**A2**

(12)

# EUROPEAN PATENT APPLICATION

(21) Application number: **86301197.9**

(22) Date of filing: **20.02.86**

(51) Int. Cl.⁴: **C 08 J 3/02,** B 01 J 13/00
// C09D9/00, C09D11/02,
C08L67/06, A61K7/00

(30) Priority: **22.02.85 GB 8504654**

(43) Date of publication of application: **01.10.86**
**Bulletin 86/40**

(84) Designated Contracting States: **BE CH DE FR GB IT LI
NL SE**

(71) Applicant: **SCOTT BADER COMPANY LIMITED,
Wollaston, Wellingborough, Northamptonshire NN9 7RL
(GB)**

(72) Inventor: **Chaudhry, Arshad-Ul-Haq, 18, Wentworth
Avenue, Wellingborough Northants (GB)**

(74) Representative: **Coleiro, Raymond et al, MEWBURN
ELLIS & CO. 2/3 Cursitor Street, London EC4A 1BQ (GB)**

(54) **A method of thickening non-aqueous liquids.**

(57) A liquid medium which is at least mainly non-aqueous is
thickened by the addition of a water-in-oil emulsion of a water
soluble polymer. The water soluble polymer is present, and
preferably dissolved, in the water phase of the emulsion. An oil-
in-water emulsifier may be added to the liquid medium to be
thickened and this emulsifier may be present in the emulsion.
The water-in-oil emulsion may be the direct product of an in-
verse emulsion polymerisation process.

EP 0 196 162 A2

- 1 -

## A METHOD OF THICKENING NON-AQUEOUS LIQUIDS

The thickening of a wide variety of aqueous media by the incorporation of small quantities of water soluble high molecular weight polymers has been known for many years. The polymers used can either be natural e.g. gelatin, or synthetic e.g. polyvinyl alcohol, polyacrylic acid and its salts. More recently due to the difficulty of obtaining good dissolution of the polymers it has become common to use inverse emulsions of water soluble polymers which when added to the aqueous medium instantaneously cause an increase in viscosity (see, for example, EP-A-0042678).

On the other hand non-aqueous liquid media have been thickened by dissolving in them water insoluble polymers or by the dispersion therein (using high shear mixers) of pyrogenic silicas (e.g. AEROSIL®) or treated clays.

The use of water soluble polymers for thickening non-aqueous media is known and is described in Carbopol® Water Soluble Resins, Service Bulletin GC-36 revised, B F Goodrich Co. However it should be noted that the Carbopol (an acrylic acid polymer crosslinked with a polyalkenyl polyether) is dispersed as a powder and the acid groups are then neutralised with an amine.

The present invention provides a method of thickening a liquid medium which is at least mainly non-aqueous with a thickener comprising a water-in-oil emulsion of a water soluble polymer, which water soluble polymer is present in the water phase of the water-in-oil emulsion. Such water-in-oil emulsions are hereinafter called "inverse emulsions" or "inverse emulsion latices".

The method of the invention may be used to thicken a polar or non polar (preferably polar) non-aqueous liquid medium by the addition of an inverse emulsion which has a low viscosity, is easy to handle and when added to non-aqueous media requires no high shear dispersing equipment or further addition of amines etc. In preferred methods, thickening is almost instantaneous and is normally complete in less than 2 minutes.

- 2 -

0196162

Although the aqueous phase of the inverse emulsion may include some undissolved water soluble polymer in addition to dissolved polymer, the aqueous phase preferably consists of an aqueous solution of the water soluble polymer dispersed in a non-aqueous continuous phase.

Such inverse emulsion latices can be prepared by any of the well known methods but preferably they are prepared by direct emulsion polymerisation starting from a solution of water soluble monomer(s). In this method the water soluble monomer(s) is/are first dissolved in water and this aqueous phase is emulsified in a hydrocarbon or other hydrophobic medium as the continuous phase to form a water-in-oil emulsion of the monomer(s).

The water soluble monomer(s) is/are then polymerised within the dispersed aqueous phase.

The product thus obtained is a fine dispersion of an aqueous solution of polymer in a hydrophobic continuous phase.

The water soluble polymers may be non-ionic, anionic or cationic in character and they may be linear or lightly crosslinked by the incorporation of a di- or poly-functional monomer. They may, for example, contain mixtures of ionic and non-ionic monomer groups.

Suitable non-ionic monomers include acrylamide, methacrylamide, vinyl pyrrolidone and mixtures of any of these with one another.

Suitable anionic monomers include acrylic acid, methacrylic acid, 2-acrylamido-2-methyl propane sulphonic acid, 2-sulphoethyl methacrylate, styrene phosphonic acid, their alkali metal and ammonium salts, sodium styrene sulphonate and mixtures of any of these with one another.

Suitable cationic monomers include dimethyl aminoethyl (meth) acrylate, diethyl aminoethyl acrylate and diallylamine, their salts and products of quaternisation and mixtures of any of these with one another.

The di- or poly-functional monomers, which are preferably present in amounts of 0-2%, usually less than 0.5%, by weight of the weight of total monomers, include diallyl urea, methylene bis acrylamide, allyl methacrylate, diallyl phthalate, glycol di(meth)acrylate, triallyl cyanurate, triallyl isocyanurate and poly-functional polyalkylene ethers and mixtures of any of these with one another.

Suitable hydrophobic continuous phases of the monomer emulsions are hydrocarbons. Useful water-in-oil emulsifiers which may be present in the monomer emulsions are those having HLB values below 9, or mixtures of surfactants each having HLB values below 9, or other suitable water-in-oil emulsifiers.

Polymerisation can be effected using known redox or thermal free radical initiators which may be oil or water soluble.

Typical inverse emulsion polymerisation processes and latices produced thereby are described in GB 841127.

The inverse emulsion prepared by such a process can be used directly as a thickener but it is sometimes advantageous to include an oil-in-water emulsifier or a mixture of oil-in-water emulsifiers in the inverse emulsion latex. Alternatively such an oil-in-water emulsifier may be added to the medium to be thickened either before, simultaneously with, or after the addition of the inverse emulsion latex.

Non-aqueous media which can be thickened by the inverse emulsions include polar media such as alcohols, glycols and polyols which are used in toilet preparations and in printing inks. The amount of thickener used is preferably from 1.5-10% by weight of the medium to be thickened, including the thickener. Other polar media which may be thickened by the inverse emulsions include methylene chloride whcih is used in paint strippers. Mixed polarity systems e.g. solutions of unsaturated polyester resins in styrene can also be thickened by methods embodying this invention.

In addition, mixtures of aqueous and non-aqueous media containing mainly non-aqueous components can also be thickened by methods embodying this invention. Indeed the paint stripper formulations mentioned above usually

- 4 -

contain methylene chloride (about 60% by weight) and hydrochloric acid and these can be thickened quickly and efficiently by methods embodying the invention.

Although not wishing to be bound by theory, it is believed that the best results are achieved when the medium to be thickened is capable of hydrogen bonding with the water soluble polymer, but without dissolving the water soluble polymer.  It is surprising that such water-in-oil emulsions of <u>water</u> soluble polymers will serve to thicken <u>non-aqueous</u> liquid media in which the polymers are insoluble at least to any appreciable extent.

Preferred methods embodying the invention will now be described in more detail with reference to the following Examples.

<u>Example 1</u>

An anionic homopolymer latex was prepared by the inverse emulsion polymerisation of sodium acrylate with the incorporation of 0.02% diallyl urea and 0.06% methylene-bis-acrylamide (both weights based on the weight of total polymerisable solids).

The method of polymerisation was carried out by firstly preparing an aqueous phase containing the following components (parts by weight).

|  | Parts |
|---|---|
| Water | 415 |
| NaOH | 100 |
| acrylic acid | 205 |
| diallyl urea | 0.05 |
| methylene-bis acrylamide | 0.15 |
| Versenex® 80 | 0.5 |

The pH was adjusted to 6 with 10% NaOH.

An oil phase containing the following components was then prepared (parts by weight).

|  | Parts | |
|---|---|---|
| Isopar® M | 200 | |
| Isopar® H | 25 | |
| Witcamide® 511 | 20 | (oil soluble surfactant) |
| Span® 80 | 5 | |

The aqueous phase was then emulsified in the oil phase to give a stable emulsion, which was deoxygenated by purging with pure nitrogen.

Polymerisation was then carried out using a redox catalyst, namely a mixture of 0.2 parts ammonium persulphate in 1 part water and 0.1 parts sodium metabisulphite in 5 parts water.

The resulting latex had a polymer solids content of 27.3% by weight. No oil-in-water emulsifier was included in the latex. This latex was used to thicken ethylene glycol.

| Latex | Ethylene glycol |
|---|---|
| % by weight of the total weight of the medium to be thickened and latex thickener | Viscosity cps (Pa.s) |
| 1 | <1,000 (<1) |
| 2 | 5,000 (5) |
| 3 | 20,000 (20) |
| 4 | 80,000 (80) |

Example 2

Polymer latex from Example 1 was used to thicken unsaturated polyester resin Crystic® 198. Addition of 5% latex (by weight of the total weight of resin and latex) to the resin increased the viscosity from less than 1,000 cps to 5,000 cps (1 to 5 Pa.s).

Example 3

An ionic copolymer containing 19 mole % sodium acrylate and 81 mole % acrylamide and 0.02%, by weight of total monomers, of methylene-bis-acrylamide was prepared by an inverse emulsion polymerisation process analogous to that described in Example 1 and the resulting latex had 25.2% by weight polymer solids content. The latex included 12% (based on solids polymer weight) of an oil-in-water emulsifier. This latex was used for thickening glycerol. An addition of 2% of latex (by weight of the total weight of resin and latex) to glycerol, produced >200,000 cps (>200 Pa.s) viscosity.

Example 4

A cationic copolymer containing 64 mole % acrylamide and 36 mole % dimethylaminoethyl-methacrylate quaternised with dimethylsulphate and containing 0.04% methylene bisacrylamide based on the total weight of the monomers, was prepared by an inverse emulsion polymerisation process analogous to that described in Example 1. The latex included 6% by weight (based on solids polymer weight) of an oil-in-water emulsifier. The resulting latex had 47.4% polymer solids content. This latex was used for thickening a paint stripper formulation, which contains 60% methylene chloride and some hydrochloric acid.

| Latex | Paint Stripper |
|---|---|
| % by weight of the total weight of the medium to be thickened and latex thickener | Viscosity cps (Pa.s) |
| 6 | 1,500 (1.5) |
| 8 | 25,000 (25) |
| 10 | 120,000 (120) |

Example 5

Polymer latex from Example 3 was used to thicken methanol containing 30% by volume water. Addition of 5% of latex by weight of the total weight of methanol, water and latex thickened the mixture to 48,000 cps (48 Pa.s).

Example 6

Polymer latex from Example 3 was used to thicken ethanol containing 30% by volume water. Addition of 10% by weight of the total weight of ethanol, water and latex thickened the mixture to 34,000 cps (34 Pa.s).

All viscosities were measured using Brookfield RVT, spindle 6, speed 5, at 25°C.

CLAIMS:-

1.    A method of thickening by the addition together of a liquid medium which is at least mainly non-aqueous and a water soluble polymer as thickener characterized in that the water soluble polymer is in the form of a water-in-oil emulsion, the water soluble polymer being present in the water phase of the water-in-oil emulsion.

2.    A method according to claim 1, which includes the preliminary step of preparing the water-in-oil emulsion of the water soluble polymer by emulsion polymerizing at least one water soluble monomer present in the water phase of a water-in-oil emulsion of the monomer.

3.    A method according to claim 2, wherein the monomer emulsion contains a water-in-oil emulsifier.

4.    A method according to claim 1, claim 2 or claim 3, wherein the thickener is added to the non-aqueous liquid medium in an amount of from 1.5 to 10% by weight based on the total weight of the thickened non-aqueous medium.

5.    A method according to any one of the preceding claims, wherein the water soluble polymer is present in solution in the aqueous phase of the water-in-oil emulsion.

6.    A method according to any one of the preceding claims, wherein the water soluble polymer is insoluble in the non-aqueous liquid medium.

7.    A method according to any one of the preceding claims, which additionally includes incorporating in the non-aqueous medium an oil-in-water emulsifier.

8.    A method according to claim 7, wherein the oil-in-water emulsifier is present in the thickener.

9.    A method according to any one of the preceding claims, wherein the non-aqueous liquid medium is polar.

10.    A method according to claim 9, wherein the non-aqueous liquid medium comprises an alcohol, glycol or polyol.

11.    A method according to claim 10, wherein the water soluble polymer contains anionic monomer groups.

12.    A method according to claim 10, wherein the anionic monomer groups are sodium acrylate groups.

13.   A method according to claim 9, wherein the non-aqueous liquid medium comprises methylene chloride.

14.   A method according to claim 13, wherein the water soluble monomer contains cationic monomer groups.

15.   A method according to any one of claims 1 to 8, wherein the non-aqueous liquid medium comprises a mixture of polar and non-polar components.

16.   A method according to claim 15, wherein the non-aqueous liquid medium is a polyester resin comprising an unsaturated polyester dissolved in a non-polar crosslinkable monomer.

17.   A method according to claim 16, wherein the water soluble polymer contains anionic monomer groups.

18.   A method according to claim 17, wherein the anionic monomer groups are sodium acrylate groups.